# EUROPEAN PATENT SPECIFICATION

(11) **EP 4 283 141 B1**
(45) Date of publication and mention of the grant of the patent: **15.01.2025**
(21) Application number: 23174105.9
(22) Date of filing: 17.05.2023
(51) Int. Cl.: F16B 33/00, F16B 35/04, F16B 37/04, H01M 50/249

(54) **VEHICLE BATTERY HOUSING LID SYSTEMS**
DECKELSYSTEME FÜR FAHRZEUGBATTERIEGEHÄUSE
SYSTÈMES DE COUVERCLE DE BOÎTIER DE BATTERIE DE VÉHICULE

(30) Priority: 23.05.2022 ES 202230439
(43) Date of publication of application: 29.11.2023
(73) Proprietor: Defta, 77700 Chessy (FR)
(72) Inventor: VERASTEGUI JURADO, David Miguel, CHESSY (FR); CARDARELLI, Piero, CHESSY (FR)
(74) Representative: Ponti & Partners, S.L.P

(56) References cited:
- DE-A1- 10 115 823
- DE-U1- 202017 105 715
- US-A1- 2007 269 155
- US-A1- 2021 296 728

## Description

### Object of the invention

The present disclosure relates to vehicle battery housing lid systems.

### Background of the invention

Today the batteries for electric, hybrid or any type of hydrogen-fuelled vehicles are comprised of different elements, which are arranged inside an essentially hollow housing which is closed at the top by a top lid. Said housing plus lid assembly, which must necessarily be fully airtight, is referred to in the jargon as a battery box or casing.

The battery lids suitable for a vehicle to which this invention refers are manufactured from a rigid, thin sheet, generally of metal, with an essentially flat configuration, although it may be ridged and contoured, for example, rectangular, although its configuration may vary depending on the battery model in question.

A current common manufacturing process for such a battery lid is by stamping.

The covers may additionally have one or more openings or through holes arranged in specific positions on their lower surface, so that associated external parts can pass through and/or be inserted into the same and be fixed by means of fasteners in the cover, and they may have different spatial shapes: flat, and concave or convex in different positions.

In particular, some models of battery lid incorporate an opening for fitting an external component, which is an external part of the battery and in the vicinity of said opening one or more apertures are provided to permit the insertion of a respective fixing bolt in each aperture. Said external component is securely mounted on the upper surface of the battery lid by means of one or more fixing bolts. This external component may be, for example, a contactor, which is an electrical element, securely accessible from the outside, and whose function is to connect the battery to the electrical system of a vehicle. Said contactor is securely mounted on the upper surface of the battery lid protruding from the upper portion of said lid.

Additionally, some models of lids may have a perimeter edge with a number of holes distributed along the perimeter edge, wherein said holes are configured to fix said lid to the battery housing. US 2021/296728 A1 relates to a lower protecting plate of a battery module for an electric car. US 2007/269155 A1 relates to a rolling bearing device for a wheel, in which a hub bolt for mounting a wheel is press-fitted and fixed in a flange of a hub wheel having a hub spindle to be assembled with a rolling bearing.

The present invention focuses on the models of battery lids that incorporate, at least, an opening for placing a contactor, where said contactor is placed partially or totally inserted in said opening, where part of the contactor may be in contact with the upper surface of the lid when it is in position. The contactor is fixed to the upper surface of the lid by means of one or more fixing elements, such as one or more bolts. By way of example, four identical bolts may be provided in the vicinity of the opening where the contactor is located, and wherein each bolt is configured to be inserted, in a close-fitting manner, into a respective hole in the lid intended for such purpose.

The external component must necessarily be mounted on the bolt from above. Therefore, it is necessary to provide a respective hole in the battery lid to receive the head of the bolt, since the head of each bolt is arranged resting on and flush against the lower surface of the battery lid. If the bolt head were placed on the upper face of the lid then a risk would be generated for the airtightness at that point, which presents a serious problem, since there are very high airtightness requirements for the entire battery lid.

The bolts known today that are suitable for this type of assembly with a very high degree of airtightness in battery lid have the following parts:
- an elongate body extending in a longitudinal direction, which is threaded on its external surface, configured to take a nut which, in turn, fixes a contactor of the battery, and where, in its mounted position, it is located on the side corresponding to the upper face of the lid, and
- a head, at one end of the body, configured to be arranged in the mounting position abutting against the underside of the lid.

This type of bolt is permanently fastened to the lower face of the lid by means of a fastening medium. The currently known means of attachment are some type of adhesive and also by welding.

It has been found that the application of a weld is not an optimal solution for this type of assembly since it does not guarantee airtightness by itself, and it can cause perforations and deformations to the sheet of the lid, which also causes undesired failures in the airtightness.

Solutions known today which use an adhesive to fix the top of the bolt head to the bottom face of the lid present a number of drawbacks, such as that the attachment of the top surface of said bolt head to a surface of the lid is not entirely efficient and does not provide optimal fixation.

Moreover, it is sought that when the bolts are placed inside the respective holes or apertures made in the lid and are adhered or welded they have a power of adhesion/fixation such that they detach when they receive a strong impact, but remain fixed without detaching from the lid during its "normal" use or handling. The purpose of this special feature is to prevent the incorrect installation of bolts, which could lead to poor installation with a lack of airtightness.

For the reasons set forth above, there is a need in the market for improving the bolt for a battery lid as well as providing an assembly to fix the bolt to the battery lid.

### Description of the invention

The object of the present invention is to provide a bolt for a lid to a battery housing, wherein said batteries are used in a vehicle, and wherein the bolt is suitable to be inserted, in a close-fitting manner, in a passage provided in the surface of a battery lid and serves to fix an external component on or to the battery lid, and which solves the aforementioned drawbacks, presenting the advantages described below.

In accordance with this object, a vehicle battery housing lid system according to claim 1 is provided.

Said plurality of grooves is intended to contact a part of the inner surface of the passage through the lid, interlocking against the hole provided in the lid, but without deforming the outer surface of the lid or any other part of the lid in the operation of exerting a pinning force to position the bolt inside the hole with a tool.

The bolt proposed by the present invention provides the following advantages:
- Eliminates risks of perforations.
- Guarantees a resistant torque in the joint sufficient to allow the mounting and tightening of the fixing nuts for the contactors, supports and any auxiliary element that the vehicle needs.
- Acts as a safety fuse against improper handling or impacts that may partially deteriorate the joint allowing its use, but without guaranteeing airtightness.
- Connects the lid-bolt assembly by means of relatively low pressure systems and with easy and safe quality control of the connection.

As an option, the head may be a widened head, with a greater width than the intermediate portion, and wherein the head is devoid of grooves in its outer lateral surface.

Preferably, the sheet constituting the battery lid has a thickness of at least 1.5 mm.

In particular reference to the intermediate portion of the bolt, it is preferably arranged at the bottom of the bolt body, continuously attached, i.e. the intermediate portion is integral to the bolt body. Also preferably, the intermediate portion is continuously attached, i.e. the intermediate portion is integral to the bolt head.

Also preferably, the intermediate portion has a slightly greater width than the bolt's threaded body.

Also preferably, the bolt head can have a square, rectangular, hexagonal or any other possible geometric shape.

Also preferably, the intermediate portion can have a prismatic configuration of square, rectangular, hexagonal or any other geometric, in addition to cylindrical, shape. In this case, if the intermediate portion is prismatic, it is not necessary to have a groove in its outer surface, since the shape of its rectangular, hexagonal, etc. base ensures the maintenance of the torque for tightening the bolt nut.

According to a possible embodiment of the invention, the intermediate portion of the bolt has a height of between 1.5 mm and 3 mm and a width or diameter greater than the gauge of the bolt.

According to a possible embodiment of the invention, the plurality of grooves provided on the outer side surface of the intermediate portion extend regularly in the longitudinal direction, wherein said longitudinal direction is the axial direction of the bolt body.

According to a possible embodiment of the invention, the plurality of grooves provided on the outer lateral surface of the intermediate portion comprises a plurality of flutes and peaks alternating in a zigzag shape. Preferably, the plurality of alternating flutes and peaks have a straight triangular profile. Preferably, the plurality of grooves occupies the entire outer surface of the grooved portion.

In particular reference to the widened head of the bolt, it preferably has a thickness between 1.1 and 2.5 times greater than the gauge of the bolt.

According to one possible embodiment of the invention, the widened head, in the case of a metric 6, has a cylindrical body of diameter between 8 mm and 18 mm or even more than 18 mm.

With reference to the bolt body in particular, according to a possible embodiment, the bolt body has a cylindrical or prismatic configuration. Preferably, the body has a width or diameter between metric 4 and metric 8. Therefore, the enlarged head has a width or diameter that is nearly twice the width or diameter of the bolt body. Preferably, the bolt body comprises, in part or in its entirety, a portion of its threaded outer surface.

Optionally, between the body and the intermediate portion of the bolt there is a conical tapering portion. By way of example, this conical tapering portion has a height between 1.4 mm and 2.4 mm. The function of said conical tapering portion is to allow the manufacture of the bolt using current manufacturing means. That is, it does not have any specific technical function for the bolt.

The external component to be fixed with one or more bolts on or to the upper face of the surface of the battery lid can, for example, be a contactor, although it can be used for fixing any support and/or system that must be attached so that it is securely mounted on said upper surface, but with the ability to be subsequently manipulated without deteriorating the behaviour of the bolt-lid assembly.

Unlike the fastening systems of bolts in battery lids already known in the state of the art, that of the present invention is characterised, in addition to the features of the bolt set forth above, in that:
- the medium for fastening the upper surface of the head of the bolt to a lower surface of the lid is an adhesive.

Advantageously, the function of the adhesive is to adhere the upper surface of the head to a face or lower surface of the lid with a removal force such that the attachment is strong enough to maintain the attachment of both parts, but at the same time not too strong, thereby serving as a safety fuse in case of blows or bad handling. In addition, it provides the advantage of ensuring the airtightness of the joint.

According to the invention, the adhesive is arranged on the entire lateral outer surface of the intermediate portion and also on at least half of the upper surface of the head corresponding to the half closest to the grooved portion.

Preferably, the adhesive used is a water-based adhesive or a toluene-based microencapsulated adhesive.

The applicant of the present invention has carried out tests to verify the improved properties of the adhesive with respect to other types of adhesives known in the state of the art. Specifically, a lid with an opening and four holes located in the vicinity of its perimeter edge has been tested by inserting respective bolts and attaching them to said lid by two types of adhesive.

The results of said tests show that the adhesive used in the present invention results in a removal force over the 4 bolts that is 30% to 50%, or even more, times greated than if the adhesives known in the prior art are used.

For a better understanding of the description made herein, a set of drawings has been provided wherein, schematically and solely by way of a non-limiting example, practical examples are represented of examples of the fastening bolt for battery housing lids and the system for fastening said bolt to the lid, which are the subject of the present invention.

### Brief description of the drawings

Figure 1 is a perspective view of an example of a battery housing with a lid for a vehicle, wherein a connector is securely mounted on the top of the lid by four fixing bolts according to the claimed invention.
Figure 2 is a top plan view of an example of the example battery housing lid for a vehicle shown in Figure 1.
Figure 3 is the same top perspective view as the previous Figure 2, but with the four fixing bolts placed in their mounting position.
Figure 4 is a front elevation view of Figure 3 with the four fixing bolts positioned in their mounting position.
Figure 5 is a sectional view of a detail A of Figure 4 where a fixing bolt placed in its mounting position can be seen.
Figure 6 is a front elevation view of a possible embodiment of the fixing bolt according to the claimed invention.
Figure 7 is a cross-sectional view B-B with reference to Figure 6.
Figure 8 is a view of a detail C from Figure 6 corresponding to a lower part of the bolt, wherein the adhesive layer is represented.

### Description of some examples of the embodiment of the invention

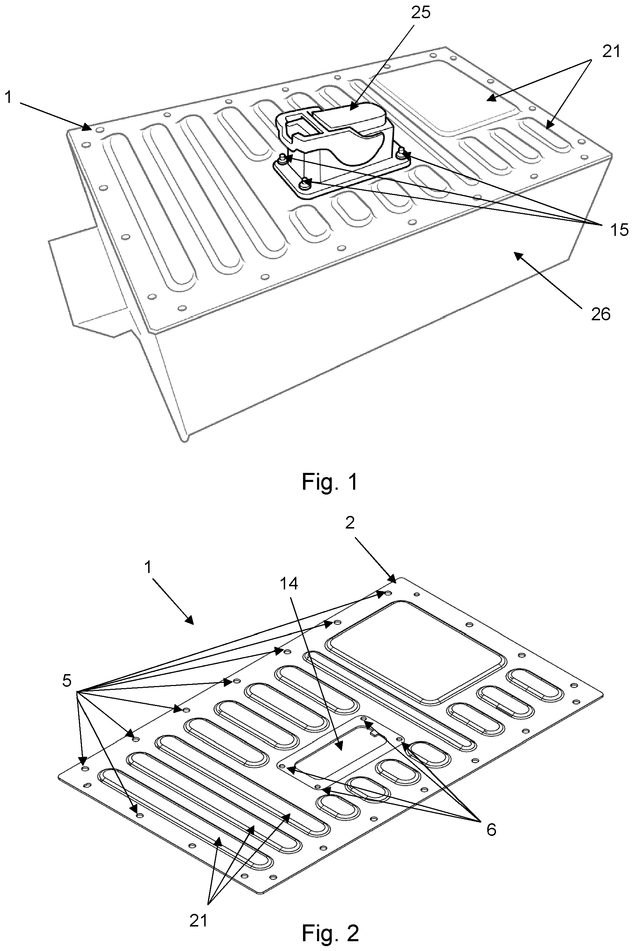

A preferred embodiment of a battery housing lid (1) suitable for a vehicle that is the object of the present invention, with four fixing bolts (15) for an external component, in this case a contactor (25), is described below, with reference to Figures 1 to 7.

The outer casing of a battery for a vehicle comprises a housing (26) and a lid (1), where the housing (26) is formed by a receptacle, which defines a cavity suitable for housing different components of the battery, and the lid (1) is arranged to cover the access opening to the cavity defined by the receptacle of the housing (26).

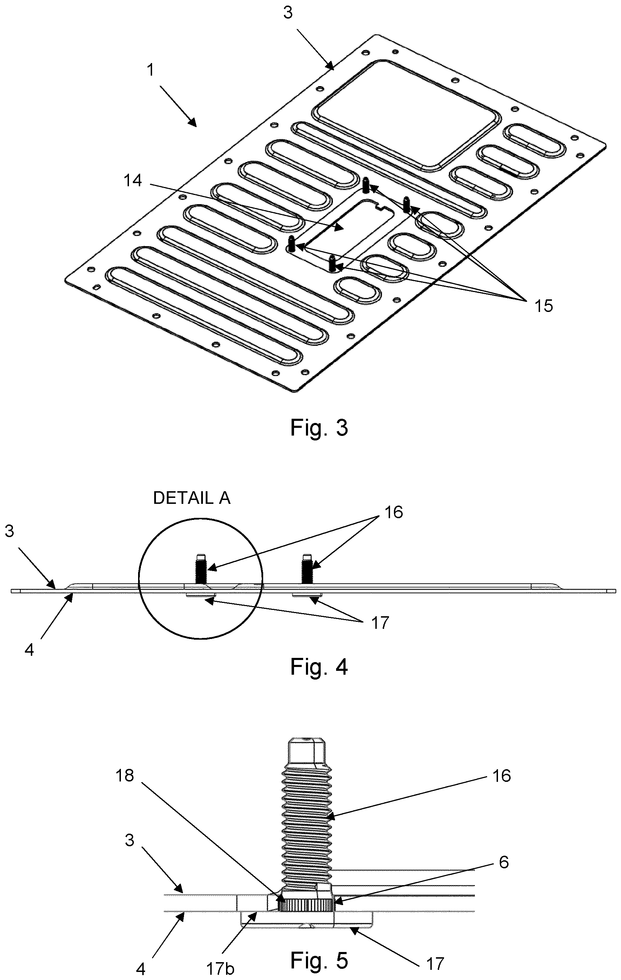

The vehicle battery lid (1) is formed by a rectangular-shaped sheet extending in the X-Y plane and has a low thickness or height. In the vicinity of the peripheral edge (24) of said lid (1) there are provided a number of holes (5) distributed along said peripheral edge. As can be seen in Figures 2 and 3, the upper surface (3) of the lid (1) has a series of ridges (21) and a rectangular-shaped opening (14) for locating a contactor (25). In particular, the opening (14) has in the vicinity of its four vertices four holes or inlets (6) for receiving four respective bolts (15).

In Figure 2 below, only the battery lid (1) can be seen, without the contactor (25). Therefore, it is possible to see the through opening (14), which has a substantially rectangular perimeter, and, in the vicinity of its perimeter edge, 4 holes (6) are present.

Each bolt (15) is mounted below the lid (1) in each of these holes (6), so that the body (16) of each bolt (15) protrudes outwards beyond the outer surface (3) of the lid (1), see Figures 3 and 4.

Figures 3 to 5 show the mounted assembly of the battery lid (1) and four fixing bolts (15) inserted in a respective hole or space (6) provided in said surface (2) of the housing lid (1). Figures 4 and 5 show how the lower surface (17b) of the head (17) of the bolt is flush abutting against the lower surface (4) of the lid (1) and the body (16) of the bolt (15) protrudes on the other side, the upper side, of the lid (1). The intermediate portion (18) is inserted in the mounting position inside the hole or inlet (6) provided in the sheet (2) of the lid (1).

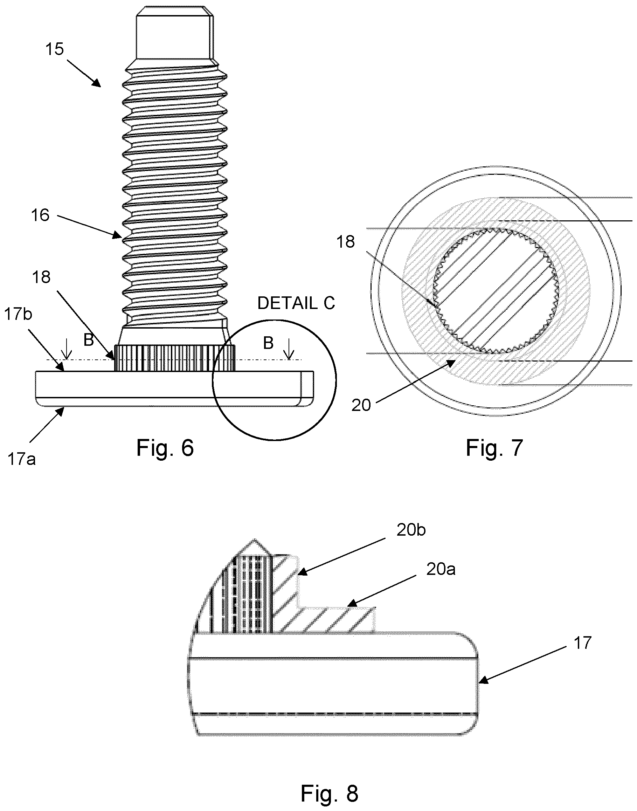

A possible embodiment of the fixing bolt (15) of the present invention is illustrated in Figures 6 to 8, wherein the adhesive layer (20) is also illustrated.

The fixing bolt (15) is formed by an elongate body (16), of cylindrical configuration, extending in a longitudinal direction corresponding to the longitudinal axis of the bolt body and having part or all of its outer surface threaded. Arranged at the lower end of the body (16) is an enlarged head (17), in this case with a circular contour, with a smooth outer surface. Furthermore, the bolt (15) has an intermediate portion (18), of cylindrical configuration, arranged at the bottom of the body (16), wherein the grooves extend over the entire lateral surface of the intermediate portion (18) in longitudinal direction in a zigzag manner with a right triangular cross-section, see Figures 6 and 7. A conical tapering portion (19) is formed between the body (16) of the fixing bolt (15) and the enlarged head (17).

Figures 7 and 8 show the adhesive layer (20) arranged on most of the outer surface of the intermediate portion (18) and also on part of the upper surface (17a) of the head (17) corresponding to the area closest to the intermediate portion (18). Figure 7 shows only the horizontal area of the adhesive layer (13) arranged on the upper surface (17a) of the head (17) of the bolt (15).

The bolt has an intermediate portion (18) with an outer diameter such as to be inserted in a close-fitting manner inside the hole (6).

Although reference has been made to a specific embodiment of the invention, it is evident to a person skilled in the art that the bolts for the lid to the housing for a battery to be installed in a vehicle described herein is susceptible to numerous variations and modifications, and that all the aforementioned details can be replaced by other technically equivalent details, without departing from the scope of protection defined by the attached claims.

## Claims

1. Vehicle battery housing lid system, wherein the system includes:
- a vehicle battery housing lid (1) comprising at least one hole (6) for receiving a corresponding bolt (15),
- at least one bolt (15) for fixing an external component on or to the upper face (3) of the surface (2) of the battery housing lid (1), wherein the at least one bolt (15) is inserted in a close-fitting manner into the at least one hole (6), wherein the bolt (15) has an elongate body (16) comprising a threaded outer portion and a head (17) arranged at a lower end of the elongate body (16), so that the elongated body (16) protrudes from one side of the upper surface (3) of the lid (1) and the head (17) of the bolt (15) is on the other side of the lid (1), the lower part of the elongate body (16) comprising an intermediate portion (18), wherein the lower part of the intermediate portion (18) contacts the upper part of the head (17) of the bolt, and wherein the outer lateral surface of the intermediate portion (18) is provided with grooves and is configured to contact a part of the inner surface of the corresponding hole (6) of the lid (1), and
- an adhesive (20) that fastens the upper surface of the head (3) of the at least one bolt (15) corresponding to the surface that is closest to the elongate body (2) to a lower surface (4) of the lid (1),
**characterised in that** the adhesive (20) is arranged on the entire outer lateral surface of the intermediate portion (18) and also on at least half of the upper surface of the head (17) corresponding to the half closest to the intermediate portion (18).

2. The vehicle battery housing lid system of claim 1, wherein the adhesive (20) is a water-based adhesive.

3. The vehicle battery housing lid system of claim 1, wherein the adhesive (20) is a toluene-based microencapsulated adhesive.

## Patentansprüche

1. Fahrzeugbatteriegehäuse-Deckelsystem, wobei das System umfasst:
- einen Fahrzeugbatterie-Gehäusedeckel (1) umfassend mindestens ein Loch (6) zum Aufnehmen eines entsprechenden Bolzens (15),
- mindestens einen Bolzen (15) zum Befestigen einer externen Komponente auf oder an der oberen Fläche (3) der Oberfläche (2) des Batteriegehäusedeckels (1), wobei der mindestens eine Bolzen (15) formschlüssig in das mindestens eine Loch (6) eingesetzt ist, wobei der Bolzen (15) einen länglichen Körper (16) umfassend einen äußeren Gewindeabschnitt und einen Kopf (17) angeordnet an einem unteren Ende des länglichen Körpers (16) aufweist, so dass der längliche Körper (16) von einer Seite der oberen Fläche (3) des Deckels (1) vorsteht und der Kopf (17) d e s Bolzens (15) auf der anderen Seite des Deckels (1) ist, wobei der untere Teil des länglichen Körpers (16) einen Zwischenabschnitt (18) umfasst, wobei der untere Teil des Zwischenabschnitts (18) den oberen Teil des Kopfes (17) des Bolzens berührt, und wobei die äußere Seitenfläche des Zwischenabschnitts (18) mit Nuten versehen ist und konfiguriert ist, einen Teil der Innenfläche des entsprechenden Lochs (6) des Deckels (1) zu berühren, aufweist, und
- einen Klebstoff (20), der die obere Fläche des Kopfes (3) des mindestens einen Bolzens (15), die der Fläche entspricht, die dem länglichen Körper (2) am nächsten ist, an einer unteren Fläche (4) des Deckels (1) befestigt,
**dadurch gekennzeichnet, dass** der Klebstoff (20) auf der gesamten äußeren Seitenfläche des Zwischenabschnitts (18) und auch auf mindestens einer Hälfte der oberen Fläche des Kopfes (17), die der dem Zwischenabschnitt (18) am nächsten liegenden Hälfte entspricht, angeordnet ist.

2. Fahrzeugbatteriegehäuse-Deckelsystem nach Anspruch 1, wobei der Klebstoff (20) ein wasserbasierter Klebstoff ist.

3. Fahrzeugbatteriegehäuse-Deckelsystem nach Anspruch 1, wobei der Klebstoff (20) ein toluolbasierter mikroverkapselter Klebstoff ist.

## Revendications

1. Système de couvercle de boîtier de batterie de véhicule, dans lequel le système inclut :
- un couvercle de boîtier de batterie de véhicule (1) comprenant au moins un trou (6) pour recevoir un boulon correspondant (15),
- au moins un boulon (15) pour fixer un composant externe sur ou à la face supérieure (3) de la surface (2) du couvercle de boîtier de batterie (1), dans lequel le au moins un boulon (15) est inséré de manière ajustée dans le au moins un trou (6), dans lequel le boulon (15) présente un corps allongé (16) comprenant une partie externe filetée et une tête (17) agencée à une extrémité inférieure du corps allongé (16), de telle sorte que le corps allongé (16) fait saillie à partir d'un côté de la surface supérieure (3) du couvercle (1) et la tête (17) du boulon (15) est sur l'autre côté du couvercle (1), la partie inférieure du corps allongé (16) comprenant une partie intermédiaire (18), dans lequel la partie inférieure de la partie intermédiaire (18) vient en contact avec la partie supérieure de la tête (17) du boulon, et dans lequel la surface latérale externe de la partie intermédiaire (18) est pourvue de rainures et est configurée pour venir en contact avec une partie de la surface interne du trou correspondant (6) du couvercle (1), et
- un adhésif (20) qui fixe la surface supérieure de la tête (3) du au moins un boulon (15), correspondant à la surface qui est la plus proche du corps allongé (2), à une surface inférieure (4) du couvercle (1),
**caractérisé en ce que** l'adhésif (20) est agencé sur toute la surface latérale extérieure de la partie intermédiaire (18) et également sur au moins la moitié de la surface supérieure de la tête (17) correspondant à la moitié la plus proche de la partie intermédiaire (18).

2. Système de couvercle de boîtier de batterie de véhicule selon la revendication 1, dans lequel l'adhésif (20) est un adhésif à base d'eau.

3. Système de couvercle de boîtier de batterie de véhicule selon la revendication 1, dans lequel l'adhésif (20) est un adhésif micro-encapsulé à base de toluène.
